# EUROPEAN PATENT APPLICATION

(11) **EP 4 340 528 A1**
(43) Date of publication of application: **20.03.2024**
(21) Application number: 22807472.0
(22) Date of filing: 10.05.2022
(51) Int. Cl.: H04W 76/27, H04W 4/06

(54) **COMMUNICATION CONTROL METHOD**

(30) Priority: 10.05.2021 US 202163186512 P
(71) Applicant: Kyocera Corporation, Kyoto-shi Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2022/019816
(87) International publication number: WO 2022/239773

(57) **Abstract**

A communication control method according to a first aspect is a communication control method performed by a user equipment in a mobile communication system providing a multicast service from a network to the user equipment and includes performing, in a Radio Resource Control (RRC) idle state or an RRC inactive state, processing of monitoring a group notification that is a notification indicating an enabled state of a multicast session where the user equipment is participating and that is transmitted from the network to a group where the user equipment belongs; performing, in response to receiving the group notification, processing of transitioning to an RRC connected state for reception of the multicast session; and performing control not to perform the processing of monitoring or the processing of transitioning when an interest in the multicast session is lost in the RRC idle state or the RRC inactive state. The performing the processing of monitoring includes monitoring the group notification when the user equipment is interested in the multicast session. The performing the processing of transitioning includes transitioning to the RRC connected state in response to receiving the group notification when the user equipment is interested in the multicast session.

## Description

### TECHNICAL FIELD

The present disclosure relates to a communication control method used in a mobile communication system.

### BACKGROUND OF INVENTION

In recent years, a mobile communication system of the fifth generation (5G) has attracted attention. New Radio (NR), which is a Radio Access Technology (RAT) of the 5G system, has features such as high speed, large capacity, high reliability, and low latency compared to Long Term Evolution (LTE), which is a fourth-generation radio access technology.

### CITATION LIST

### NON-PATENT LITERATURE

Non-Patent Document 1: 3GPP Technical Specification "3GPP TS 38.300 V16.3.0 (2020-09)"

### SUMMARY

In a first aspect, a communication control method is a communication control method performed by a user equipment in a mobile communication system that provides a multicast service from a network to the user equipment and includes performing, in an RRC idle state or an RRC inactive state, processing of monitoring a group notification being a notification indicating an enabled state of a multicast session where the user equipment is participating, the group notification being transmitted from the network to a group where the user equipment belongs; performing, in response to receiving the group notification, processing of transitioning to an RRC connected state for reception of the multicast session; and performing control not to perform the processing of monitoring or the processing of transitioning when an interest in the multicast session is lost in the RRC idle state or the RRC inactive state. The performing the processing of monitoring includes monitoring the group notification when the user equipment is interested in the multicast session. The performing the processing of transitioning includes transitioning to the RRC connected state in response to receiving the group notification when the user equipment is interested in the multicast session.

In a second aspect, a communication control method is a communication control method performed in a mobile communication system that provides a multicast service from a network to a user equipment and includes managing, by the user equipment, a COUNT value as a Packet Data Convergence Protocol (PDCP) variable. The managing includes acquiring a PDCP Sequence Number (SN) included in a header of a PDCP packet received first from the network via multicast; and using the PDCP SN acquired as a part of the COUNT value.

In a third aspect, a communication control method is a communication control method performed in a mobile communication system that provides a multicast service from a network to a user equipment and includes receiving, by the user equipment in an RRC inactive state after participating in a multicast session, a paging message including a TMGITemporary Mobile Group Identity) of the multicast session where the user equipment is participating; and transitioning to an RRC connected state in response to receiving the paging message including the TMGI.

In a fourth aspect, a communication control method is a communication control method performed in a mobile communication system that provides a multicast service from a network to a user equipment and includes transmitting, by a base station, a paging message including a TMGI as a group notification; and monitoring, by the user equipment, the paging message on a paging occasion of the user equipment. The transmitting includes transmitting the paging message including the TMGI at a timing based on a paging request from an Access and Mobility Management Function (AMF).

In a fifth aspect, a communication control method is a communication control method performed in a mobile communication system that provides a multicast broadcast service (MBS) from a base station to a user equipment and includes transmitting, by the base station that transmits MBS data in an MBS session, an initial value of a PDCP variable and/or an RLC variable to be used by the user equipment to receive the MBS data.

In a sixth aspect, a communication control method is a communication control method performed by a user equipment in a mobile communication system that provides a multicast service from a network to the user equipment and includes performing a session participation procedure for a multicast session on a network; acquiring, from the network, period information indicating a period during the user equipment being maintained in a state of participation in the multicast session; performing, when an interest in the multicast session is present, the session participation procedure or a session continuation procedure on the network before the period indicated in the period information expires or when the period expires; and performing, when no interest in the multicast session is present, control not to perform the session participation procedure or the session continuation procedure on the network before the period indicated in the period information expires or when the period expires.

In a seventh aspect, a communication control method is a communication control method performed in a mobile communication system that provides a multicast service from a network to a user equipment and includes performing, by the user equipment in an RRC idle state or an RRC inactive state, a random access procedure on a base station included in the network; transmitting, by the user equipment to the base station, a notification indicating session withdrawal from a multicast session where the user equipment is participating during the random access procedure; and terminating, by the user equipment, the random access procedure without transitioning to an RRC connected state.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a base station (gNB) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating a correspondence relationship between a downlink Logical channel and a downlink Transport channel according to an embodiment.
FIG. 7 is a diagram illustrating a delivery method of MBS data according to an embodiment.
FIG. 8 is a diagram illustrating a split MBS bearer according to an embodiment.
FIG. 9 is a diagram illustrating a basic operation in a first operation pattern of the mobile communication system according to an embodiment.
FIG. 10 is a diagram illustrating an example of the first operation pattern of the mobile communication system according to an embodiment.
FIG. 11 is a diagram illustrating another example of the first operation pattern of the mobile communication system according to an embodiment.
FIG. 12 is a diagram illustrating an example of a second operation pattern of the mobile communication system according to an embodiment.
FIG. 13 is a diagram illustrating an example of a third operation pattern of the mobile communication system according to an embodiment.
FIG. 14 is a diagram illustrating operations according to a variation.

### DESCRIPTION OF EMBODIMENTS

Introduction of multicast broadcast services to the 5G system (NR) has been under study. NR multicast broadcast services are desired to provide enhanced services compared to LTE multicast broadcast services.

In view of this, the present disclosure provides a communication control method for implementing enhanced multicast and broadcast services.

A mobile communication system according to an embodiment is described with reference to the drawings. In the description of the drawings, the same or similar parts are denoted by the same or similar reference signs.

### Configuration of Mobile Communication System

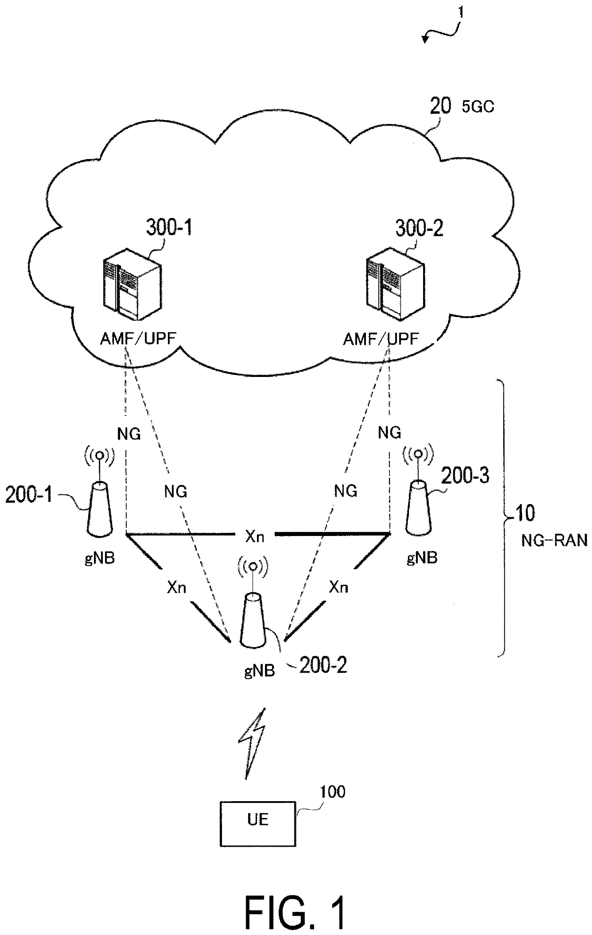

First, a configuration of a mobile communication system according to an embodiment is described. FIG. 1 is a diagram illustrating a configuration of the mobile communication system according to an embodiment. This mobile communication system complies with the 5th Generation System (5GS) of the 3GPP standard. The description below takes the 5GS as an example, but Long Term Evolution (LTE) system may be at least partially applied to the mobile communication system. A sixth generation (6G) system may be at least partially applied to the mobile communication system.

As illustrated in FIG. 1, the mobile communication system includes a User Equipment (UE) 100, a 5G radio access network (Next Generation Radio Access Network (NG-RAN)) 10, and a 5G Core Network (5GC) 20.

The UE 100 is a mobile wireless communication apparatus. The UE 100 may be any apparatus as long as the UE 100 is used by a user. Examples of the UE 100 include a mobile phone terminal (including a smartphone), and/or a tablet terminal, a notebook PC, a communication module (including a communication card or a chipset), a sensor or an apparatus provided on a sensor, a vehicle or an apparatus provided on a vehicle (Vehicle UE), or a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency.

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

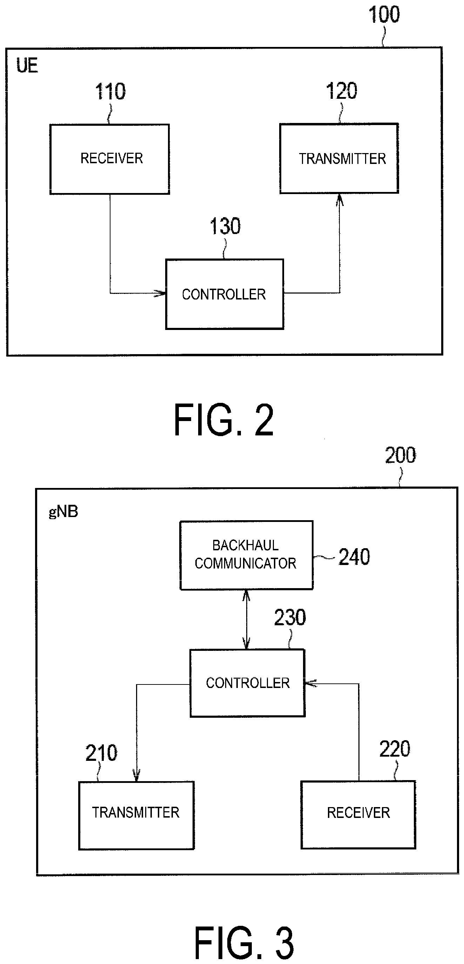

FIG. 2 is a diagram illustrating a configuration of the user equipment (UE) 100 according to an embodiment.

As illustrated in FIG. 2, the UE 100 includes a receiver 110, a transmitter 120, and a controller 130.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control in the UE 100. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

FIG. 3 is a diagram illustrating a configuration of the base station (gNB) 200 according to an embodiment.

As illustrated in FIG. 3, the gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of controls for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. Note that the gNB may include a Central Unit (CU) and a Distributed Unit (DU) (i.e., functions are divided), and both units may be connected via an F1 interface.

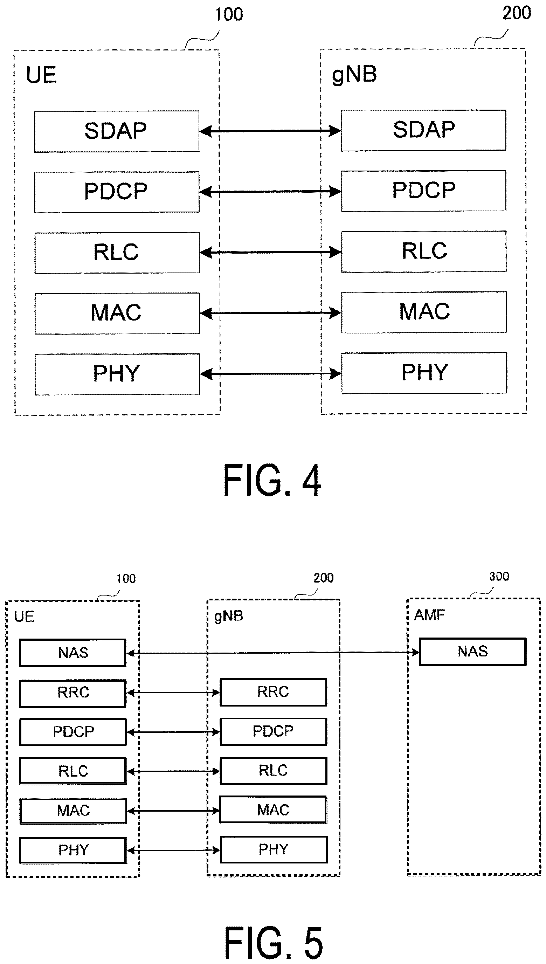

FIG. 4 is a diagram illustrating a configuration of a protocol stack of a radio interface of a user plane handling data.

As illustrated in FIG. 4, a radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression and decompression, and encryption and decryption.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

FIG. 5 is a diagram illustrating a configuration of a protocol stack of a radio interface of a control plane handling signaling (a control signal).

As illustrated in FIG. 5, the protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection between the RRC of the UE 100 and the RRC of the gNB 200 (RRC connection) exists, the UE 100 is in an RRC connected state. When a connection between the RRC of the UE 100 and the RRC of the gNB 200 (RRC connection) does not exist, the UE 100 is in an RRC idle state. When the connection between the RRC of the UE 100 and the RRC of the gNB 200 is suspended, the UE 100 is in an RRC inactive state.

The NAS layer which is positioned upper than the RRC layer performs session management, mobility management, and the like. NAS signaling is transmitted between the NAS layer of the UE 100 and the NAS layer of the AMF 300.

Note that the UE 100 includes an application layer other than the protocol of the radio interface.

### MBS

An MBS according to an embodiment is described. The MBS is a service in which the NG-RAN 10 can provide broadcast or multicast, i.e., Point To Multipoint (PTM) data transmission to the UE 100. The MBS may be referred to as the Multimedia Broadcast and Multicast Service (MBMS). Note that use cases (service types) of the MBS include public safety communication, mission critical communication, Vehicle to Everything (V2X) communication, IPv4 or IPv6 multicast delivery, Internet Protocol TeleVision (IPTV), group communication, and software delivery.

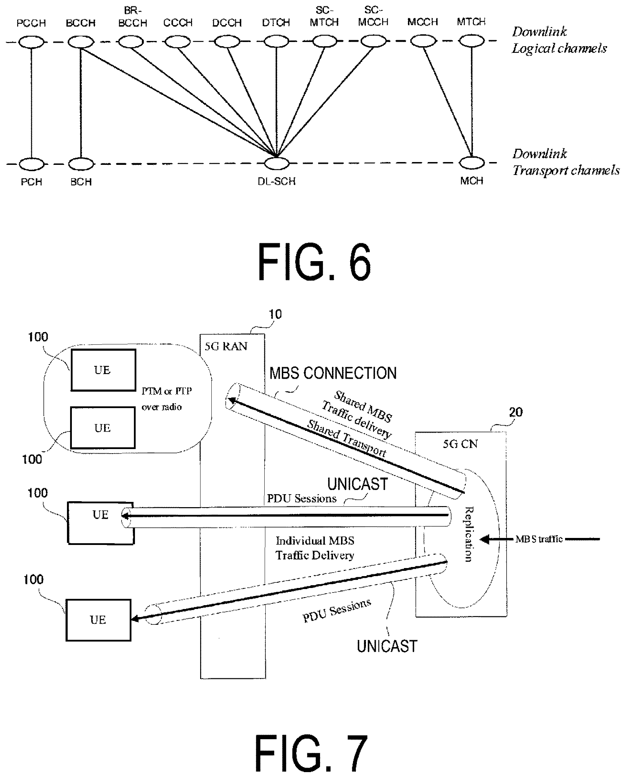

MBS Transmission in LTE includes two schemes, i.e., a Multicast Broadcast Single Frequency Network (MBSFN) transmission and Single Cell Point To Multipoint (SC-PTM) transmission. FIG. 6 is a diagram illustrating a correspondence relationship between a downlink Logical channel and a downlink Transport channel according to an embodiment.

As illustrated in FIG. 6, the logical channels used for MBSFN transmission are a Multicast Traffic Channel (MTCH) and a Multicast Control Channel (MCCH). The transport channel used for the MBSFN transmission is a Multicast Channel (MCH). The MBSFN transmission is designed primarily for multi-cell transmission, and in an MBSFN area including a plurality of cells, each cell synchronously transmits the same signal (the same data) in the same MBSFN subframe.

The logical channels used for SC-PTM transmission are a Single Cell Multicast Traffic Channel (SC-MTCH) and a Single Cell Multicast Control Channel (SC-MCCH). The transport channel used for SC-PTM transmission is a Downlink Shared Channel (DL-SCH). The SC-PTM transmission is primarily designed for single-cell transmission and corresponds to broadcast or multicast data transmission on a cell-by-cell basis. The physical channels used for SC-PTM transmission are a Physical Downlink Control Channel (PDCCH) and a Physical Downlink Shared Channel (PDSCH) and enable dynamic resource allocation.

Although an example will be mainly described below in which the MBS is provided using a scheme same as, and/or similar to, the SC-PTM transmission scheme, the MBS may be provided using the MBSFN transmission scheme. An example will be mainly described in which the MBS is provided using multicast. Accordingly, the MBS may be interpreted as multicast. Note that the MBS may be provided using broadcast.

The MBS data refers to data provided by the MBS. The MBS control channel refers to the MCCH or the SC-MCCH. The MBS traffic channel refers to the MTCH or the SC-MTCH. Note that the MBS data may be transmitted in unicast. The MBS data may be referred to as MBS packets or MBS traffic.

The network can provide different MBS services for respective MBS sessions. The MBS session is identified by at least one of Temporary Mobile Group Identity (TMGI) and a session identifier, and at least one of these identifiers is referred to as an MBS session identifier. Such an MBS session identifier may be referred to as an MBS service identifier or a multicast group identifier.

FIG. 7 is a diagram illustrating a delivery method of the MBS data according to an embodiment.

As illustrated in FIG. 7, the MBS data (MBS Traffic) is delivered from a single data source (application service provider) to a plurality of UEs. The 5G CN (5GC) 20, which is a 5G core network, receives the MBS data from the application service provider and performs Replication of the MBS data to deliver the resultant.

From the perspective of the 5GC 20, two delivery methods are possible: shared MBS data delivery (Shared MBS Traffic delivery) and individual MBS data delivery (Individual MBS Traffic delivery).

In the shared MBS data delivery, a connection is established between the NG-RAN 10 that is a 5G radio access network (5G RAN) and the 5GC 20 to deliver the MBS data from the 5GC 20 to the NG-RAN 10. Such a connection (a tunnel) is hereinafter referred to as an "NMS connection".

The MBS connection may be referred to as a Shared MBS Traffic delivery connection or a shared transport. The MBS connection terminates at the NG-RAN 10 (i.e., the gNB 200). The MBS connection may correspond to an MBS session on a one-to-one basis.

The gNB 200 selects a transmission scheme either of Point-to-Point (PTP: unicast) or Point-to-Multipoint (PTM: multicast or broadcast) at the discretion of the gNB 200 and transmits the MBS data to the UE 100 through the selected transmission scheme.

On the other hand, in the individual MBS data delivery, a unicast session is established between the NG-RAN 10 and the UE 100 to individually deliver the MBS data from the 5GC 20 to the UE 100. Such unicast may be referred to as a Protocol Data Unit (PDU) session (PDU Session). The unicast (PDU session) terminates at the UE 100.

### Split MBS Bearer

A split MBS bearer according to an embodiment is described.

The gNB 200 may configure an MBS bearer split into a PTP communication path and a PTM communication path (hereinafter referred to as a "split MBS bearer" as appropriate) for the UE 100. This allows the gNB 200 to dynamically switch the transmission of the MBS data to the UE 100 between the PTP (PTP communication path) and the PTM (PTM communication path). The gNB 200 may perform duplication transmission of the same MBS data using both the PTP (PTP communication path) and the PTM (PTM communication path) to enhance reliability.

A predetermined layer terminating the split is the MAC layer (HARQ), the RLC layer, the PDCP layer, or the SDAP layer. Although an example in which the predetermined layer terminating the split is the PDCP layer will be mainly described below, the predetermined layer may be the MAC layer (HARQ), the RLC layer, or the SDAP layer.

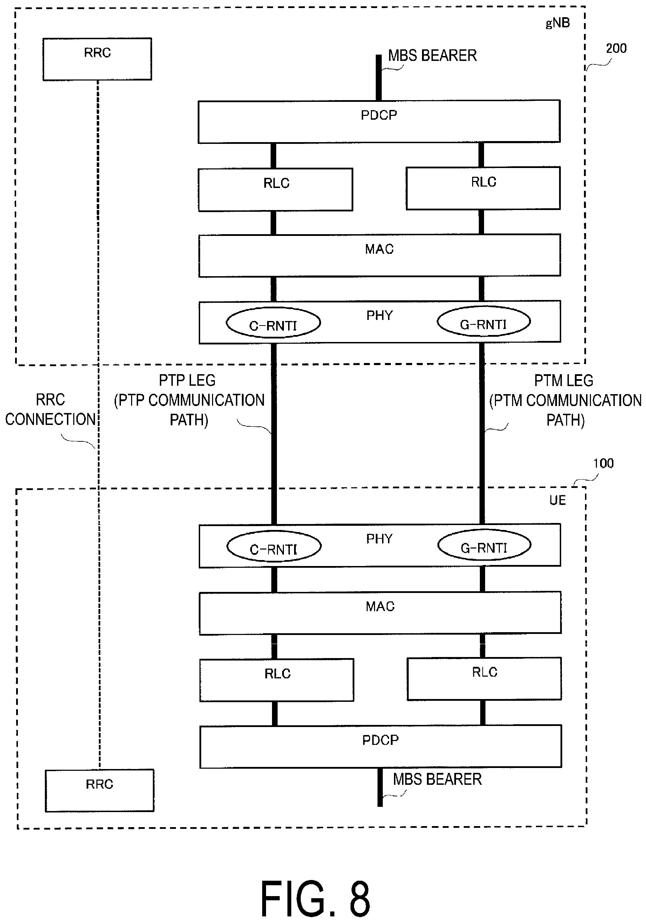

FIG. 8 is a diagram illustrating the split MBS bearer according to an embodiment. Hereinafter, the PTP communication path is referred to as a PTP leg, and the PTM communication path is referred to as a PTM leg. A functional unit corresponding to each layer is referred to as an entity.

As illustrated in FIG. 8, each of the PDCP entity of the gNB 200 and the PDCP entity of the UE 100 splits an MBS bearer, which is a bearer (data radio bearer) used for the MBS, into a PTP leg and a PTM leg. Note that the PDCP entity is provided for each bearer.

Each of the gNB 200 and the UE 100 includes two RLC entities provided for the respective legs, one MAC entity, and one PHY entity. The PHY entity may be provided per leg. Note that, in a Dual Connectivity in which the UE 100 communicates with two gNBs 200, the UE 100 may include two MAC entities.

The PHY entity transmits and receives data of the PTP leg using a cell RNTI (Cell Radio Network Temporary Identifier (C-RNTI)) that is allocated to the UE 100 on a one-to-one basis. The PHY entity transmits and receives data of the PTM leg using a group RNTI (Group Radio Network Temporary Identifier (G-RNTI)) allocated to the MBS session on a one-to-one basis. The C-RNTI is different for each UE 100, but the G-RNTI is an RNTI common to a plurality of UEs 100 receiving one MBS session.

In order to perform PTM transmission of the MBS data (multicast or broadcast) from the gNB 200 to the UE 100 using a PTM leg, a split MBS bearer needs to be configured for the UE 100 from the gNB 200 and the PTM leg needs to be activated (activation). In other words, even if a split MBS bearer is configured for the UE 100, when a PTM leg is in a deactivation state, the gNB 200 cannot perform the PTM transmission of the MBS data using the PTM leg.

In order that the gNB 200 and the UE 100 perform PTP transmission of the MBS data (unicast) using a PTP leg, a split MBS bearer needs to be configured for the UE 100 from the gNB 200 and the PTP leg needs to be activated. In other words, even if a split MBS bearer is configured for the UE 100, when a PTP leg is in a deactivation state, the gNB 200 cannot perform the PTP transmission of the MBS data using the PTP leg.

When the PTM leg is in an activated state, the UE 100 monitors a Physical Downlink Control Channel (PDCCH) to which a G-RNTI associated with the MBS session is applied (i.e., performs blind decoding of the PDCCH using the G-RNTI). The UE 100 may monitor the PDCCH only at a scheduling occasion of the MBS session.

When the PTM leg is in a deactivated state, the UE 100 does not monitor a PDCCH to which a G-RNTI associated with the MBS session is applied (i.e., does not perform blind decoding of the PDCCH using the G-RNTI).

When the PTP leg is in an activated state, the UE 100 monitors a PDCCH to which a C-RNTI is applied. When Discontinuous Reception (DRX) in the PTP leg is configured, the UE 100 monitors a PDCCH for a configured OnDuration period. When a cell (frequency) associated with the MBS session is specified, the UE 100 may monitor a PDCCH for the cell even when the cell is deactivated.

When the PTP leg is in a deactivated state, the UE 100 may monitor a PDCCH to which a C-RNTI is applied in preparation for normal unicast downlink transmission of other than the MBS data. Note that, when a cell (frequency) associated with an MBS session is specified, the UE 100 need not monitor a PDCCH for the MBS session.

Note that the above-described split MBS bearer is assumed to be configured by an RRC message (for example, an RRC Reconfiguration message) transmitted by the RRC entity of the gNB 200 to the RRC entity of the UE 100.

### Operation of Mobile Communication System

Operations of the mobile communication system 1 according to an embodiment will be described.

In the following description, the main assumption is that the UE 100 in the RRC connected state receives MBS data (i.e., multicast data) transmitted from the gNB 200 by multicast. Thus, the MBS session is assumed to be a multicast session. The MBS session identifier is assumed to be a multicast session identifier (e.g., TMGI, Session ID, or G-RNTI). The multicast session is mapped to a PTM leg or PTM bearer (multicast bearer). An MBS traffic channel (MTCH) is used to transmit multicast data from the gNB 200 to the UE 100.

In the following description, an operation is assumed in which, after participating in a multicast session, the UE 100 transitions to the RRC idle state or the RRC inactive state and waits for the start of the multicast session. The UE 100 receives, in the RRC idle state or the RRC inactive state, a group notification that is a notification indicating an enabled state of a multicast session in which the UE 100 is participating and that is transmitted from a network to a group to which the UE 100 belongs. In response to receiving the group notification, the UE 100 transitions to the RRC connected state and receives the multicast data in the multicast session from the gNB 200.

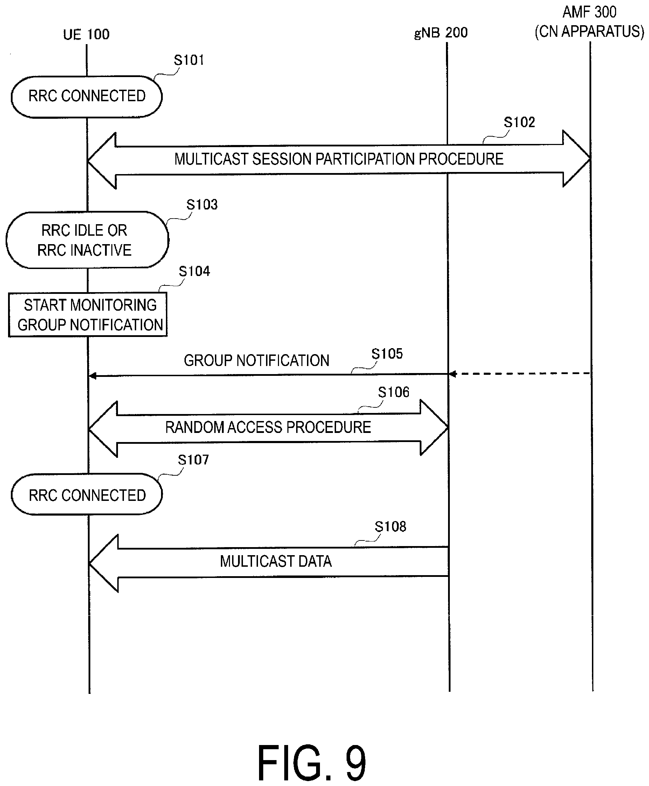

FIG. 9 is a diagram illustrating a basic operation in a first operation pattern of the mobile communication system 1. Hereinafter, the gNB 200 and the AMF 300 are collectively referred to as the "network" as appropriate. The AMF 300 is an example of a core network (CN) apparatus. The AMF 300 manages an MBS session (multicast session) in cooperation with a session management apparatus. The session management apparatus is another example of the CN apparatus.

As illustrated in FIG. 9, in Step S101, the UE 100 is in the RRC connected state. The UE 100 is assumed to take an interest in a certain multicast session (hereinafter referred to as a "target multicast session"). "Taking an interest in a multicast session" means that an upper layer of the UE 100 requests or desires to receive the multicast session. The upper layer includes an NAS layer. The upper layer may further include an application.

In step S102, the UE 100 (NAS entity) performs a multicast session participation procedure on the network to participate in the target multicast session. For example, the UE 100 transmits, to the AMF 300, a first NAS message requesting participation in the target multicast session and receives, from the AMF 300, a second NAS message approving participation in the target multicast session, and thus participates in the target multicast session. "Participating in the target multicast session" refers to registering the UE 100 in the CN apparatus as a member of the UE group (multicast group) that receives the multicast session. Note that participation in a multicast session may be performed while the multicast session is in an enabled state (during transmission). Participation in a multicast session may be performed in a disabled state (during wait for the start of transmission or while transmission is interrupted).

In step S103, the UE 100 transitions to the RRC idle state or the RRC inactive state. Specifically, the UE 100 transitions to the RRC idle state or the RRC inactive state in response to receiving an RRC release message from the gNB 200. Prior to step S103, the UE 100 may transmit to the gNB 200 an RRC message (for example, a UE Assistance Information message) including an information element prompting the UE 100 to transition to the RRC idle state or the RRC inactive state. The gNB 200 may determine to cause the UE 100 to transition to the RRC idle state or the RRC inactive state in response to the disabled state of the multicast session in which the UE 100 is interested.

In step S104, the UE 100 starts monitoring a group notification from the gNB 200. The group notification may be a paging message transmitted from the gNB 200. The group notification may also be a message transmitted on a multicast control channel (MCCH) from the gNB 200. The group notification may be transmitted in response to the multicast session being enabled from the disabled state. The group notification may notify a session start of the multicast session. In the following, the main assumption is that the group notification is a paging message. The UE 100 monitors the group notification on a paging occasion (PO) of a periodically configured paging frame (PF).

In step S105, the gNB 200 transmits a group notification addressed to the group including the UE 100 or to the group in which the UE 100 is interested. The gNB 200 may transmit a group notification (paging message) to the UE 100 in response to a paging request from the AMF 300. The group notification may include at least one selected from the group consisting of a multicast session identifier indicating the group, an identifier of each UE belonging to the group, and a multicast session identifier associated with the identifier. Upon receiving the group notification including the identifier of the UE 100, the UE 100 can recognize that the target multicast session in which the UE 100 has participated is enabled. "The target multicast session is enabled" may mean that transmission of multicast data is started in the target multicast session. "The target multicast session is enabled" may mean that transmission of multicast data is enabled to be started in the target multicast session.

In step S106, the UE 100 performs a random access procedure on the gNB 200 for reception in the target multicast session.

In step S107, the UE 100 transitions to the RRC connected state due to the random access procedure.

In step S108, the UE 100 receives, in the RRC connected state, the multicast data in the target multicast session from the gNB 200. Prior to the reception of the data, the gNB 200 may perform configuration for the UE 100 for the target multicast session reception. Such configuration may be, for example, an RRC Reconfiguration message including a multicast radio bearer (MRB) configuration.

In such a basic operation, the UE 100 may lose an interest in the target multicast session after transitioning to the RRC idle state or the RRC inactive state in step S103. "Losing an interest in the target multicast session" means that the upper layer of the UE 100 no longer requests or desires reception in the target multicast session. For example, this corresponds to a case where a user closes an IPTV application. In such a case, the UE 100 may transition to the RRC connected state and then perform a multicast session withdrawal procedure to withdraw from the target multicast session. "Withdrawing from the target multicast session" refers to deregistering the UE 100 from the CN apparatus as a member of the group of UEs receiving the multicast session (multicast group). For example, the UE 100 may withdraw from the target multicast session by transmitting, to the AMF 300, a third NAS message requesting withdrawal from the target multicast session and receiving, from the AMF 300, a fourth NAS message approving withdrawal from the target multicast session.

Here, when the UE 100 having lost an interest in the target multicast session performs the processing of monitoring the group notification or transitions to the RRC connected state, power consumption of the UE 100 may increase, and utilization efficiency of radio resources may decrease. For example, transitioning to the RRC connected state only to perform the multicast session withdrawal procedure is inefficient. For example, an efficient operation is to transition to the RRC connected state when unicast data communication becomes necessary later and perform the multicast session withdrawal procedure at that time.

### (1) First Operation Pattern

A first operation pattern of the mobile communication system 1 according to an embodiment will be described.

In the first operation pattern, the UE 100 performs, in the RRC idle state or the RRC inactive state, processing of monitoring a group notification that is a notification indicating an enabled state of a multicast session (target multicast session) in which the UE 100 is participating and that is transmitted from the network to a group to which the UE 100 belongs or a group in which the UE 100 is interested. In response to receiving the group notification, the UE 100 performs processing of transitioning to the RRC connected state for reception in the multicast session. Note that, in the RRC idle state or the RRC inactive state, upon losing an interest in the multicast session, the UE 100 performs control not to perform the processing of monitoring the group notification or the processing of transitioning to the RRC connected state. This allows an inefficient operation by the UE 100 to be suppressed.

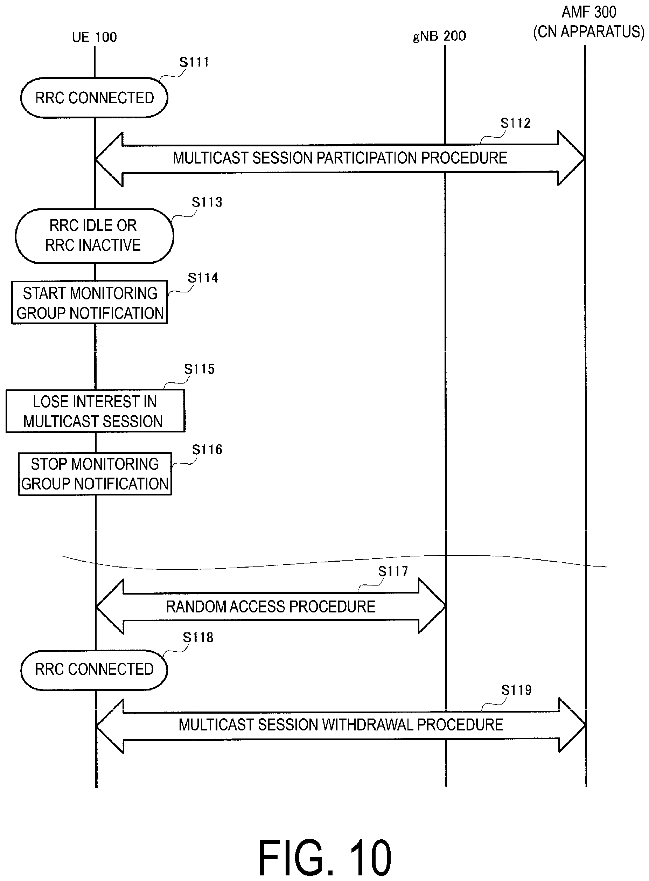

FIG. 10 is a diagram illustrating an example of the first operation pattern of the mobile communication system 1. Here, description will be given mainly on differences from the basic operation described above.

As illustrated in FIG. 10, in step S111, the UE 100 in the RRC connected state is assumed to take an interest in a certain multicast session (hereinafter referred to as a "target multicast session").

In step S112, the UE 100 (NAS entity) performs, on the network (AMF 300), a multicast session participation procedure to participate in the target multicast session.

In step S113, the UE 100 transitions to the RRC idle state or the RRC inactive state.

In step S114, the UE 100 (AS entity) starts monitoring the group notification from the gNB 200. The AS entity may be an RRC entity. The group notification may be a paging message transmitted from the gNB 200. The group notification may also be a message transmitted on a multicast control channel (MCCH) from the gNB 200. In the following, the main assumption is that the group notification is a paging message. The UE 100 monitors the group notification on a paging occasion (PO) of a periodically configured paging frame (PF). That is, the UE 100 periodically monitors the group notification.

In step S115, the UE 100 is assumed to lose an interest in the target multicast session. In the UE 100, the NAS entity may notify the AS entity (e.g., RRC entity) that an interest in the target multicast session is lost.

In step S116, the UE 100 (AS entity) stops the periodic monitoring of the group notification. For example, in the UE 100, the controller 130 controls the receiver 110 not to monitor the group notification. This reduces the processing load and power consumption of the UE 100. Note that, when paging is used as the group notification and the group notification is the same in the reception (transmission) occasion as the normal paging (paging for unicast communication), the control not to monitor the group notification corresponds to the UE 100 omitting reception processing related to the group notification on the reception occasion. The omission of the reception processing includes at least one of, for example, not monitoring the RNTI dedicated to the group notification, not demodulating a message part dedicated to the group notification, and not checking an information element (for example, a multicast session identifier or a list of the multicast session identifiers) related to the group notification in the paging message. In addition, when the group notification is different in the reception (transmission) occasion from the normal paging, the omission of the reception processing means that the UE 100 does not perform the reception operation (does not wake up) on the reception occasion of the group notification. Note that, even when the monitoring of the group notification is stopped, the monitoring of the normal paging is to be continued.

For example, when paging (group paging) is used as the group notification, for configurations of PF/PO for monitoring the group paging, two manners are possible: 1) PF/PO dedicated to group paging (different from unicast paging) and 2) PF/PO the same as that of normal paging. In the case of 1), the UE 100 is sufficient to stop monitoring the PF/PO for group paging. In the case of 2), since the PF/PO is the same as that of normal paging, the UE 100 omits monitoring of only a portion related to group paging. For example, the UE 100 may perform an operation of not monitoring an RNTI (for example, a G-P-RNTI) dedicated to group paging when the RNTI is defined, not checking (a list of) group identifiers in the paging message, or the like.

Subsequently, in step S117, the UE 100 performs a random access procedure on the gNB 200 for a purpose other than reception in a multicast session, for example, due to generation of uplink data to be transmitted or generation of downlink data to be received (i.e., reception of normal paging/paging intended for unicast).

In step S118, the UE 100 transitions to the RRC connected state.

In step S119, the UE 100 (NAS entity) performs a session withdrawal procedure for the target multicast session on the network (AMF 300). This allows the session withdrawal procedure to be efficiently performed.

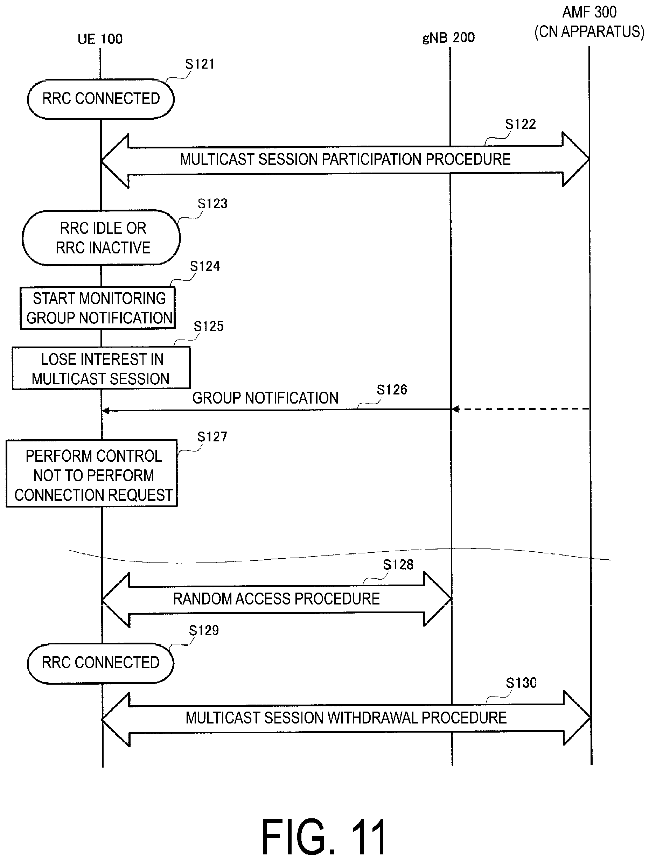

FIG. 11 is a diagram illustrating another example of the first operation pattern of the mobile communication system 1. Here, description will be given mainly on differences from the basic operation described above.

As illustrated in FIG. 11, in step S121, the UE 100 in the RRC connected state is assumed to take an interest in a certain multicast session (hereinafter referred to as a "target multicast session").

In step S122, the UE 100 (NAS entity) performs, on the network (AMF 300), a multicast session participation procedure to participate in the target multicast session.

In step S123, the UE 100 transitions to the RRC idle state or the RRC inactive state.

In step S124, the UE 100 starts monitoring a group notification from the gNB 200.

In step S125, the UE 100 is assumed to lose an interest in the target multicast session. In the UE 100, the NAS entity may notify the AS entity (e.g., RRC entity) that an interest in the target multicast session is lost.

In step S126, the gNB 200 transmits a group notification addressed to a group including the UE 100. The gNB 200 may transmit a group notification (paging message) to the UE 100 in response to a paging request from the AMF 300. The group notification may include an identifier of each UE belonging to the group and a multicast session identifier associated with the identifier. Upon receiving the group notification including the identifier of the UE 100, the UE 100 can recognize that the target multicast session in which the UE 100 has participated is enabled.

In step S127, the access stratum entity (AS entity) of the UE 100 performs control not to transition to the RRC connected state even when receiving the group notification addressed to the UE 100. The AS entity may be an RRC entity. In the UE 100, the AS entity may notify the NAS entity of the multicast session identifier included in the group notification addressed to the UE 100 (in particular, the multicast session identifier associated with the identifier of the UE 100). When the NAS entity determines no interest in the multicast session indicated by the notified multicast session identifier, the NAS entity does not request to the AS entity execution of the processing of transitioning to the RRC connected state. On the other hand, upon determining an interest in the multicast session indicated by the notified multicast session identifier, the NAS entity may request to the AS entity execution of the processing of transitioning to the RRC connected state.

Subsequently, in step S128, the UE 100 performs a random access procedure on the gNB 200 for a purpose other than reception in a multicast session, for example, due to generation of uplink data to be transmitted or generation of downlink data to be received (i.e., reception of normal paging/paging intended for unicast).

In step S129, the UE 100 transitions to the RRC connected state.

In step S130, the UE 100 (NAS entity) performs a session withdrawal procedure for the target multicast session on the network (AMF 300). This allows the session withdrawal procedure to be efficiently performed.

### (2) Second Operation Pattern

A second operation pattern of the mobile communication system 1 according to an embodiment will be described.

As described above, even when the CN apparatus recognizes that the UE 100 is participating in the target multicast session, a state may be assumed in which the UE 100 has already lost an interest in the target multicast session. In other words, a mismatch between the state of interest of the UE 100 and the state of participation of the UE 100 may occur. However, NAS message transmission is required to explicitly perform session withdrawal, leading to an inefficient operation as described above. Accordingly, in the second operation pattern, an operation of enabling the UE 100 to implicitly (automatically) perform session withdrawal will be described. With such an operation, even when the UE 100 moves out of the service area or the power supply is turned off, the above-described mismatch problem can be solved.

In the second operation pattern, the UE 100 performs a session participation procedure for the target multicast session on the network. The UE 100 acquires, from the network (AMF 300), period information indicating a period during which the UE 100 is maintained in the state of participation in the target multicast session. Such a validity period may also be referred to as a validity period or a participation duration (continuation) time but will hereinafter be referred to as a validity period.

When being interested in the target multicast session, the UE 100 performs a session participation procedure or a re-participation procedure on the AMF 300 before the validity period indicated in the validity period information expires or when the validity period expires. On the other hand, when taking no interest in the target multicast session, the UE 100 performs control not to perform the session participation procedure or the re-participation procedure on the AMF 300 before the validity period indicated by the validity period information expires or when the validity period expires. Thus, the UE 100 having lost an interest in the target multicast session can implicitly (automatically) withdraw from the target multicast session by not performing the session participation procedure or the re-participation procedure.

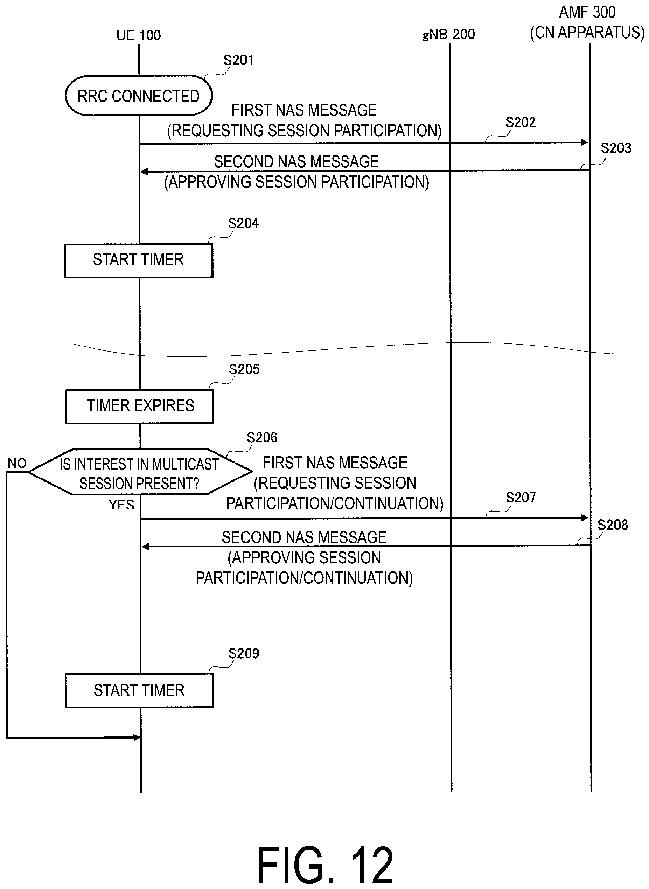

FIG. 12 is a diagram illustrating an example of the second operation pattern of the mobile communication system 1. Here, description will be given mainly on differences from the basic operation described above.

As illustrated in FIG. 12, in step S201, the UE 100 in the RRC connected state is assumed to take an interest in a certain multicast session (target multicast session).

In steps S202 and S203, the UE 100 (NAS entity) performs a multicast session participation procedure on the network (AMF 300) to participate in the target multicast session.

To be more specific, in step S202, the UE 100 (NAS entity) transmits, to the AMF 300, a NAS message (first NAS message) requesting participation in the target multicast session. The first NAS message may include the identifier of the UE 100 and the multicast session identifier of the target multicast session. The UE 100 may transmit information indicating the validity period desired by the UE 100 in the first NAS message.

In step S203, in response to receiving the first NAS message, the AMF 300 transmits, to the UE 100 (NAS entity), a second NAS message approving participation in the target multicast session. The AMF 300 may transmit the validity period information in the second NAS message. When the first NAS message includes the information indicating the validity period desired by the UE 100, the AMF 300 may determine the validity period based on the information and transmit the validity period information indicating the determined validity period in the second NAS message.

The validity period information may be a timer value indicating the validity period. The validity period information may be information indicating the end of the validity period in absolute time. Hereinafter, the validity period information is assumed to be a timer value.

In step S204, upon acquiring the validity period information (timer value) from the network, for example, upon acquiring the validity period information (timer value) from the second NAS message, the UE 100 (NAS entity) starts a timer configured with the timer value. Note that the timer may be started or run only when the UE 100 is in a CM_IDLE state. The CM_IDLE state refers to a state in which the UE 100 has no NAS signaling connection. The timer may be started or restarted (reset and started) in response to the UE 100 transitioning to the CM_IDLE after receiving the second NAS message. The timer may be stopped in response to transition to CM_CONNECTED.

In step S205, the timer expires. Processing from step S206 to step S209 described below may be performed before step S205.

In step S206, the UE 100 (NAS entity) determines whether to be interested in the target multicast session.

When determining to be interested in the target multicast session (step S206: YES), in steps S207 and S208, the UE 100 (NAS entity) performs, on the network (AMF 300), a multicast session participation/continuation procedure for participation (or continuing participation) in the target multicast session.

To be more specific, in step S207, the UE 100 (NAS entity) transmits, to the AMF 300, a NAS message (first NAS message) requesting participation (or continuation of participation) in the target multicast session. The first NAS message may include the identifier of the UE 100 and the multicast session identifier of the target multicast session. The UE 100 may transmit information indicating the validity period desired by the UE 100 in the first NAS message.

In step S208, in response to receiving the first NAS message, the AMF 300 transmits, to the UE 100 (NAS entity), the second NAS message approving the participation (or continuation of participation) in the target multicast session. The AMF 300 may transmit the validity period information in the second NAS message. When the first NAS message includes the information indicating the validity period desired by the UE 100, the AMF 300 may determine the validity period based on the information and transmit the validity period information indicating the determined validity period in the second NAS message.

The validity period information may be a timer value indicating the validity period. The validity period information may be information indicating the end of the validity period in absolute time.

In step S209, upon acquiring the validity period information (timer value) from the network, for example, upon acquiring the validity period information (timer value) from the second NAS message, the UE 100 (NAS entity) starts a timer configured with the timer value. Note that, as described above, the timer may be started or run only when the UE 100 is in the CM_IDLE state. When the second NAS message approving the continuation in step S208 does not include the validity period information (timer value), a value already acquired with the second NAS message for the first approval in step S203 may be used.

As described above, when the UE 100 is still interested in the target multicast session, the validity period is updated, and the state of participation of the UE 100 in the target multicast session continues.

On the other hand, when determining no interest in the target multicast session (step S206: NO), the UE 100 does not perform the multicast session participation/continuation procedure. When the UE 100 provides no multicast session participation/continuation request within the validity period or within a predetermined time from the elapse of the validity period, the AMF 300 considers that the UE 100 has no interest in the target multicast session (or the UE 100 has moved out of the service area or the power supply has been turned off), and manages the UE 100 as being in the state of having withdrawn from the target multicast session.

### (3) Third Operation Pattern

A third operation pattern of the mobile communication system 1 according to an embodiment will be described.

As described above, the UE 100 is inefficient to transition to the RRC connected state only to notify session withdrawal. In the third operation pattern, the UE 100 notifies session withdrawal during the random access procedure and terminates the random access procedure without transitioning to the RRC connected state, thus making the notification of session withdrawal efficient.

In the third operation pattern, the UE 100 performs the random access procedure on the gNB 200, in the RRC idle state or the RRC inactive state. During the random access procedure, the UE 100 transmits, to the gNB 200, a notification indicating session withdrawal from the multicast session in which the UE 100 is participating (the target multicast session). Then, the UE 100 terminates the random access procedure without transitioning to the RRC connected state.

The random access procedure includes transmitting a random access preamble to the gNB 200 using a Physical Random Access Channel (PRACH) resource. The UE 100 may transmit, to the gNB 200, the random access preamble using a PRACH resource for session withdrawal as a notification indicating session withdrawal. The gNB 200 identifies the UE 100 that has transmitted the notification indicating session withdrawal and notifies the CN apparatus (AMF 300) of the session withdrawal of the UE 100.

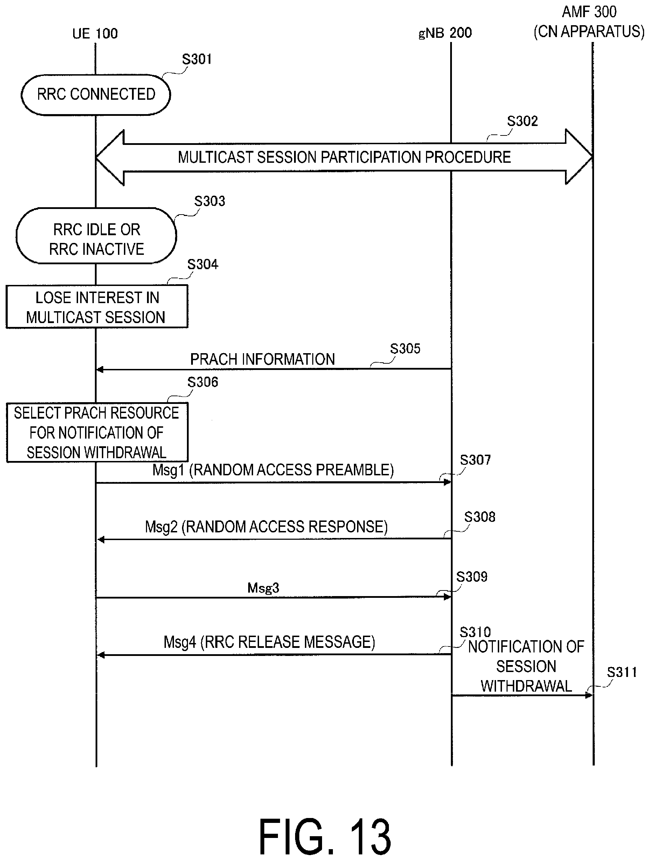

FIG. 13 is a diagram illustrating an example of the third operation pattern of the mobile communication system 1. Here, description will be given mainly on differences from the basic operation described above.

As illustrated in FIG. 13, in step S301, the UE 100 in the RRC connected state is assumed to take an interest in a certain multicast session (target multicast session).

In step S302, the UE 100 (NAS entity) performs, on the network (AMF 300), a multicast session participation procedure to participate in the target multicast session.

In step S303, the UE 100 transitions to the RRC idle state or the RRC inactive state.

In step S304, the UE 100 (NAS entity) is assumed to lose an interest in the target multicast session. In the UE 100, the NAS entity may notify the AS entity (e.g., RRC entity) that an interest in the target multicast session is lost.

In step S305, the UE 100 (AS entity) receives, from the gNB 200, PRACH information indicating configuration of PRACH resources. The PRACH information may be broadcast in the system information from the gNB 200. For example, a part of the configured PRACH resources may correspond to a resource region for notification of session withdrawal (for example, a dedicated resource region). The resource region for notification of session withdrawal may include a plurality of separated sub-resource regions for the respective multicast session identifiers.

In step S306, the UE 100 (AS entity) selects a PRACH resource included in the resource region for notification of session withdrawal, from among the PRACH resources indicated in the PRACH information. Here, the UE 100 (AS entity) may select a sub-resource region associated with a multicast session identifier of the target multicast session.

In step S307, the UE 100 (AS entity) transmits a random access preamble (Msg1) to the gNB 200 by using the PRACH resource selected in step S306. Since the PRACH resource for notification of session withdrawal is used to the random access preamble, the gNB 200 considers that the UE 100 having transmitted the random access preamble has notified the session withdrawal.

In step S308, the gNB 200 transmits a random access response (Msg2) to the UE 100.

In step S309, in response to receiving the random access response (Msg2), the UE 100 transmits a connection request message (Msg3) to the gNB 200. The connection request message (Msg3) may be an RRC Setup Request message or an RRC Resume Request message. The connection request message (Msg3) may include at least one selected from the group consisting of the identifier of the UE 100, information notifying withdrawal from the multicast session, and the multicast session identifier of the target multicast session. Based on the information included in the connection request message (Msg3), the gNB 200 identifies the UE 100 and recognizes withdrawal from the multicast session. The gNB 200 may identify the UE 100 after Contention resolution using Msg4 described below. When the connection request message (Msg3) is the RRC Resume Request message, that is, when the UE 100 is in the RRC inactive state, the gNB 200 may identify the UE context of the UE 100 held by the gNB 200.

In step S310, the gNB 200 transmits an RRC release message to the UE 100 as Msg4. As a result, the UE 100 maintains the RRC idle state or the RRC inactive state. Note that, when another data transmission and reception with the UE 100, the gNB 200 may cause the UE 100 to transition to the RRC connected state by transmitting the RRC Setup message or the RRC Resume message as Msg4.

In step S311, the gNB 200 notifies the AMF 300 of withdrawal of the UE 100 from the multicast session. For example, the gNB 200 performs the notification through an NG-AP message transmitted on the NG interface. The gNB 200, instead of the UE 100, may generate an NAS message and perform the notification using the NAS message. Such a message may include the identifier of the UE 100 and the multicast session identifier of the target multicast session. Note that the processing in step S311 may be performed before step S310.

In the present operation pattern, a 4-step random access procedure is described; however, a 2-step random access procedure may be adopted. In the 2-step random access procedure, the UE 100 collectively transmits Msg1 and Msg3 to the gNB 200 as MsgA, and the gNB 200 collectively transmits Msg2 and Msg4 to the UE 100 as MsgB.

### Variation of Operation of Mobile Communication System

A variation of operations of the mobile communication system 1 will be described. The present variation may be applied not only to multicast but also to broadcast MBS services.

The PDCP entity of the UE 100 configures and updates a PDCP variable in accordance with a PDCP sequence number (PDCP SN) included in a PDCP packet received from the gNB 200. Typically, the UE 100 configures the PDCP variable with an initial value of zero and updates (increments, counts up) the PDCP variable in response to receiving the packet from the gNB 200. The PDCP entity of the UE 100 participating in a certain MBS session from the beginning can sequentially update the PDCP variable to bring the PDCP variable to the latest state. The PDCP variable includes a PDCP SN and a hyper frame number (HFN). The HFN is incremented when the PDCP SN wraps around. In other words, the HFN is a value that is counted up each time the PDCP SN wraps around. For example, the UE 100 and the gNB 200 manage COUNT, which is a count value including the PDCP SN and the HFN.

The PDCP entity of the UE 100 participating in the MBS session halfway through does not know the current PDCP variable (particularly the HFN portion) and fails to successfully perform a predetermined PDCP operation. The predetermined PDCP operation is reception window control and/or a packet reordering operation. A PDCP variable used for the reception window control may be RX_NEXT and/or RX_DELIV. RX_NEXT includes a sequence number of a PDCP SDU expected to be received next. RX_DELIV includes a sequence number of the oldest of the PDCP SDUs awaiting being received and not yet provided to the upper layer. Typically, initial values of RX_NEXT and RX_DELIV are "0". A PDCP variable used for the packet Reordering may be RX_REORD. RX_REORD is a sequence number of the PDCP SDU starting a timer indicating the maximum time to wait for the packet reordering. For example, when the sequence number of the received packet is smaller than RX_REORD, the UE 100 discards the packet. The PDCP variable (COUNT value) is also used for encryption of PDCP packets for security.

In particular, the initial value of RX_DELIV is 0, and in the case of unicast, both gNB 200 and UE 100 increment the HFN for each wrap-around of the PDCP SN based on the initial value. This synchronizes the HFNs of gNB 200 and UE 100. In the case of multicast, which RX_DELIV the UE 100 starts to receive the PDCP packet at is uncertain. Accordingly, the valid HFN (that is, the HFN managed by the gNB 200) is not known by looking at only the received PDCP packet. Note that the header of the PDCP PDU includes the PDCP SN but no HFN. In the following, the PDCP variable is the HFN and/or the COUNT value.

In the present variation, the gNB 200 transmitting the MBS data in the MBS session transmits, by multicast or broadcast in the MBS session, the initial value of the PDCP variable to be used by the UE 100 participating in the MBS session halfway through to receive the MBS data. That is, the gNB 200 transmits the current PDCP variable in the MBS data transmission (MBS traffic channel). The gNB 200 may periodically transmit, by multicast or broadcast, the initial value of the PDCP variable to be used by the UE 100 participating in the MBS session halfway through to receive the MBS data. In response to receiving the initial value of the PDCP variable from the gNB 200, the UE 100 participating in the MBS session halfway through performs reception processing for MBS data by using the received initial value of the PDCP variable. This allows even the UE 100 participating in the MBS session halfway through to successfully perform the PDCP operation.

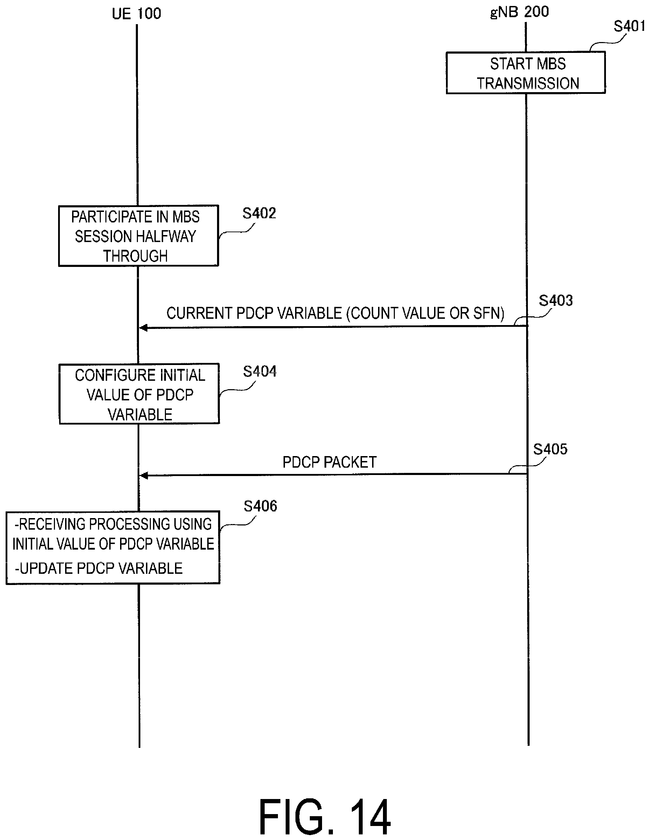

FIG. 14 is a diagram illustrating operations according to the present variation.

As illustrated in FIG. 14, the gNB 200 starts MBS data transmission for a certain MBS session. The gNB 200 updates the PDCP variable while transmitting the MBS data.

In step S402, the UE 100 participates late in the MBS session (participates in the MBS session halfway through). Note that the UE 100 does not know the current COUNT value (particularly, the HFN portion), and thus fails to execute the PDCP processing on the data packets (PDCP packets) constituting the MBS data. The UE 100 may acquire the PDCP SN included in the header of the PDCP packet received first from the gNB 200 and use the acquired PDCP SN as a part of the COUNT value managed by the UE 100.

In step S403, the gNB 200 periodically transmits, by multicast or broadcast, the COUNT value (or HFN) of the currently transmitted MBS-data packet (PDCP packet) or the COUNT value (or HFN) of the MBS-data packet (PDCP packet) to be transmitted next. In particular, the gNB 200 transmits the current COUNT value (or HFN) on the MBS traffic channel using the G-RNTI. For example, the gNB 200 transmits the initial value of the PDCP variable in at least one selected from the group consisting of a MAC Control Element (CE), an RLC Control PDU, and a PDCP Control PDU. When using a MAC CE, the gNB 200 may transmit a set of the multicast session identifier (TMGI) and the COUNT value. When using a PDCP/RLC Control PDU, the UE 100 can identify the COUNT value as that of a bearer/LCH to which the PDCP/RLC Control PDU belongs. Here, when a lower layer (for example, MAC) receives the COUNT value (or HFN), the lower layer notifies an upper layer (for example, PDCP) of the COUNT value (or HFN).

In step S404, the UE 100 (PDCP entity) configures the PDCP variable notified from the gNB 200 as the initial value of the PDCP variable managed by the UE 100.

In step S405, the gNB 200 transmits MBS-data packets (PDCP packets) by multicast or broadcast.

In step S406, the UE 100 uses the PDCP variable managed by the UE 100 to perform PDCP processing on the MBS-data packets (PDCP packets) received from gNB 200 and updates the PDCP variable managed by the UE 100.

Note that the operation according to the present variation may be applied to the operation of the RLC, and "PDCP" may be interpreted as "RLC". The initial value of the PDCP variable may be the initial value of the RLC variable. In the present variation, an example has been described in which the initial value of the PDCP variable to be used by the UE 100 participating in the MBS session halfway through to receive the MBS data is transmitted by multicast or broadcast in the MBS session; however, the gNB 200 may transmit the initial value of the PDCP variable by broadcast using the system information (SIB).

### Other Embodiments

The operation flows described above can be separately and independently implemented, and also be implemented in combination of two or more of the operation flows. For example, some of the steps in one operation flow may be applied to another operation flow. Some of the steps in one operation flow may be replaced with some of the steps in another operation flow.

In the embodiment described above, an example in which the base station is an NR base station (i.e., a gNB) is described; however, the base station may be an LTE base station (i.e., an eNB). The base station may be a relay node such as an Integrated Access and Backhaul (IAB) node. The base station may be a Distributed Unit (DU) of the IAB node.

A program causing a computer to execute each of the processes performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing each of the processes performed by the UE 100 or the gNB 200 may be integrated, and at least part of the UE 100 or the gNB 200 may be configured as a semiconductor integrated circuit (a chipset or a System on a Chip (SoC)).

The phrases "based on" and "depending on" used in the present disclosure do not mean "based only on" and "only depending on," unless specifically stated otherwise. The phrase "based on" means both "based only on" and "based at least in part on". Similarly, the phrase "depending on" means both "only depending on" and "at least partially depending on". "Obtain" or "acquire" may mean to obtain information from stored information, may mean to obtain information from information received from another node, or may mean to obtain information by generating the information. The terms "include", "comprise" and variations thereof do not mean "include only items stated" but instead mean "may include only items stated" or "may include not only the items stated but also other items". The term "or" used in the present disclosure is not intended to be "exclusive or". Further, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

This application claims priority to US Provisional Patent Application No. 63/186512 (filed on May 10, 2021), the contents of which are incorporated herein by reference in their entirety.

## Claims

1. A communication control method performed by a user equipment in a mobile communication system configured to provide a multicast service from a network to the user equipment, the communication control method comprising:
performing, in a Radio Resource Control (RRC) idle state or an RRC inactive state, processing of monitoring a group notification being a notification indicating an enabled state of a multicast session where the user equipment is participating, the group notification being transmitted from the network to a group where the user equipment belongs; and
performing, in response to receiving the group notification, processing of transitioning to an RRC connected state for reception of the multicast session,
wherein the performing the processing of monitoring comprises monitoring the group notification when the user equipment is interested in the multicast session, and
wherein the performing the processing of transitioning comprises transitioning to the RRC connected state in response to receiving the group notification when the user equipment is interested in the multicast session.

2. The communication control method according to claim 1, comprising
performing control not to perform the processing of monitoring or the processing of transitioning when an interest in the multicast session is lost in the RRC idle state or the RRC inactive state.

3. The communication control method according to claim 1,
wherein the processing of monitoring comprises processing of periodic monitoring the group notification, and
wherein the performing the control comprises stopping the periodic monitoring of the group notification.

4. The communication control method according to claim 1, further comprising:
receiving, by an access stratum entity of the user equipment, the group notification; and
informing, from the access stratum entity to a non-access stratum entity of the user equipment, a multicast session identifier comprised in the group notification,
wherein the performing the control comprises causing the non-access stratum entity not to request the access stratum entity to execute the processing of transitioning when the non-access stratum entity determines no interest in the multicast session based on the multicast session identifier.

5. The communication control method according to any one of claims 1 to 4, further comprising
performing a session withdrawal procedure for the multicast session on the network when, after the performing the control, transitioning to the RRC connected state is performed for a purpose other than reception of the multicast session.

6. A communication control method performed in a mobile communication system configured to provide a multicast service from a network to a user equipment, the communication control method comprising
managing, by the user equipment, a COUNT value as a Packet Data Convergence Protocol (PDCP) variable,
wherein the managing comprises
acquiring a PDCP Sequence Number (SN) comprised in a header of a PDCP packet received first from the network via multicast; and
using the PDCP SN acquired as a part of the COUNT value.

7. A communication control method performed in a mobile communication system configured to provide a multicast service from a network to a user equipment, the communication control method comprising:
receiving, by the user equipment in an RRC inactive state after participating in a multicast session, a paging message comprising a TMGITemporary Mobile Group Identity) of the multicast session where the user equipment is participating; and
transitioning to an RRC connected state in response to receiving the paging message comprising the TMGI.

8. A communication control method performed in a mobile communication system configured to provide a multicast service from a network to a user equipment, the communication control method comprising:
transmitting, by a base station, a paging message comprising a TMGI as a group notification; and
monitoring, by the user equipment, the paging message on a paging occasion of the user equipment,
wherein the transmitting comprises transmitting the paging message comprising the TMGI at a timing based on a paging request from an Access and Mobility Management Function (AMF).

9. A communication control method performed in a mobile communication system configured to provide a multicast broadcast service (MBS) from a base station to a user equipment, the communication control method comprising
transmitting, by the base station configured to transmit MBS data in an MBS session, an initial value of a Packet Data Convergence Protocol (PDCP) variable and/or a Radio Link Control (RLC) variable to be used by the user equipment to receive the MBS data.

10. The communication control method according to claim 9,
wherein the transmitting the initial value comprises transmitting the initial value in the MBS session via multicast or broadcast.

11. The communication control method according to claim 10, further comprising
performing, by the user equipment that participates in the MBS session halfway through and in response to receiving the initial value, processing of receiving the MBS data by using the initial value received.

12. The communication control method according to claim 10 or 11,
wherein the transmitting the initial value comprises periodically transmitting the initial value via multicast or broadcast.

13. The communication control method according to claim 10 or 11,
wherein the transmitting the initial value comprises transmitting the initial value in at least one selected from the group consisting of a Medium Access Control Control Element (MAC CE), an RLC Control PDU, and a PDCP Control Protocol Data Unit (PDU).

14. A communication control method performed by a user equipment in a mobile communication system configured to provide a multicast service from a network to the user equipment, the communication control method comprising:
performing a session participation procedure for a multicast session on a network;
acquiring, from the network, period information indicating a period during the user equipment being maintained in a state of participation in the multicast session;
performing, when an interest in the multicast session is present, the session participation procedure or a session continuation procedure on the network before the period indicated in the period information expires or when the period expires; and
performing, when no interest in the multicast session is present, control not to perform the session participation procedure or the session continuation procedure on the network before the period indicated in the period information expires or when the period expires.

15. The communication control method according to claim 14,
wherein the performing the session participation procedure comprises
transmitting, to the network, a first Non-Access Stratum (NAS) message requesting participation in the multicast session; and
receiving, from the network, a second NAS message being a message approving participation in the multicast session, the second NAS message comprising the period information, and
wherein the acquiring the period information comprises acquiring the period information comprised in the second NAS message.

16. The communication control method according to claim 14 or 15, further comprising
transmitting information indicating the period desired by the user equipment to the network before acquiring the period information from the network.

17. The communication control method according to claim 14 or 15, further comprising
starting, when the period information is a timer value indicating the period and the period information is acquired from the network, a timer configured with the timer value as the period information.

18. A communication control method performed in a mobile communication system configured to provide a multicast service from a network to a user equipment, the communication control method comprising:
performing, by the user equipment in an RRC idle state or an RRC inactive state, a random access procedure on a base station comprised in the network;
transmitting, by the user equipment to the base station, a notification indicating session withdrawal from a multicast session where the user equipment is participating during the random access procedure; and
terminating, by the user equipment, the random access procedure without transitioning to an RRC connected state.

19. The communication control method according to claim 18,
wherein the performing the random access procedure comprises transmitting a random access preamble to the base station by using a Physical Random Access Channel (PRACH) resource, and
wherein the transmitting the notification indicating the session withdrawal comprises transmitting, as the notification, the random access preamble by using the PRACH resource for session withdrawal.

20. The communication control method according to claim 18 or 19, further comprising:
identifying, by the base station, the user equipment having transmitted the notification indicating the session withdrawal; and
informing, by the base station to a core network apparatus, the session withdrawal of the user equipment.
